# EUROPÄISCHE PATENTSCHRIFT

(11) **EP 3 231 081 B1**
(45) Veröffentlichungstag und Bekanntmachung des Hinweises auf die Patenterteilung: **08.09.2021**
(21) Anmeldenummer: 15775726.1
(22) Anmeldetag: 09.10.2015
(51) Int. Cl.: H02P 6/28, H02P 23/14

(54) **VERFAHREN UND VORRICHTUNG ZUM STEUERN BZW. REGELN EINER PERMANENT ERREGTEN SYNCHRONMASCHINE**
METHOD AND DEVICE FOR CONTROLLING OR REGULATING A PERMANENTLY EXCITED SYNCHRONOUS MACHINE
PROCÉDÉ ET DISPOSITIF DE COMMANDE OU DE RÉGULATION D'UNE MACHINE SYNCHRONE EXCITÉE EN PERMANENCE

(30) Priorität: 12.12.2014 DE 102014225754
(43) Veröffentlichungstag der Anmeldung: 18.10.2017
(73) Patentinhaber: Robert Bosch GmbH, 70442 Stuttgart (DE)
(72) Erfinder: GRABS, Manfred, 75446 Wiernsheim (DE)
(86) Internationale Anmeldenummer: PCT/EP2015/073345
(87) Internationale Veröffentlichungsnummer: WO 2016/091428

(56) Entgegenhaltungen:
- WO-A2-2014/198444
- DE-A1-102008 042 931
- DE-A1-102011 118 480
- None

## Beschreibung

### Stand der Technik

Die vorliegende Erfindung betrifft ein Verfahren und einen Regler zum Regeln einer permanent erregten Synchronmaschine.

Aus Stand der Technik ist eine Vektorregelung oder feldorientierte Regelung einer permanent erregten Synchronmaschine bekannt. Dabei wird eine rotorbezogene Größe in einer Vektordarstellung mit einer d-Komponente und einer dazu orthogonalen q-Komponente dem Regler als Regeldifferenz zugeführt. Durch Anwendung eines Regelalgorithmus bestimmt der Regler auf Grundlage dieser rotorbezogenen Regeldifferenz eine rotorbezogene Stellgröße. Die Darstellung der rotorbezogenen Größen in dem d/q-System entspricht einer Darstellung dieser Größen in einem kartesischen Koordinatensystem, das mit dem Läufer rotiert. Für die unmittelbare Steuerung der Bestromung der Synchronmaschine sind aber statorbezogene Größen erforderlich. Außerdem können die Phasenströme der Synchronmaschine mit jeweiligen für die drei Phasen bereitgestellten Phasenstromsensoren nur statorbezogen erfasst und als Regelgrößen an den Regler zurückgeführt werden.

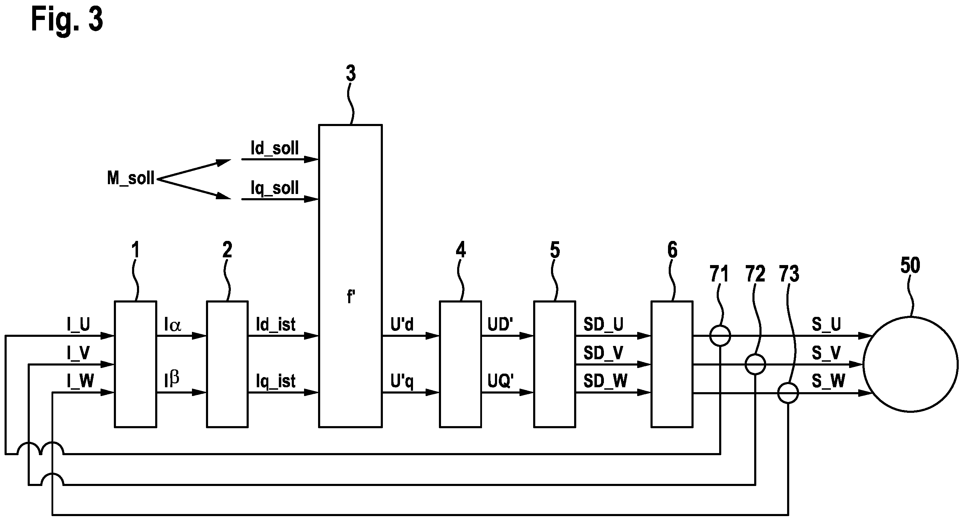

Eine entsprechende Regleranordnung aus dem Stand der Technik ist in Fig. 3 veranschaulicht. Durch Phasenstromsensoren 71, 72 und 73 erfasste statorbezogene Phasenstromwerte I_U, I_V bzw. I_W einer Synchronmaschine werden, als eine an eine Regelungseinrichtung 3 zurückzuführende Regelgröße, mittels einer Clarke-Transformation und einer anschließenden Park-Transformation (siehe entsprechende Einrichtungen 1 und 2 in Fig. 3) in Ist-Stromwerte Id_ist und Iq_ist in kartesischer bzw. d/q-Darstellung transformiert. Neben diesen Ist-Stromwerten Id_ist und Iq_ist wird ein Sollstromwert ermittelt oder berechnet aus einem Sollmoment M_soll als eigentlicher Führungsgröße, mit den Komponenten Id_soll und Iq_soll in d/q-Darstellung der Regelungseinrichtung 3 zugeführt, die durch Anwendung eines Regelalgorithmus f' auf die zugeführten d/q-Größen einen Regelfehler zwischen diesen Größen minimieren soll. Am Ausgang der Regelungseinrichtung 3 stehen demgemäß als eine rotorbezogene Stellgröße die Spannungswerte Ud' und Uq' in kartesischer Darstellung bereit, die durch eine Inverse Park-Transformation (siehe Einrichtung 4 in Fig. 3) in statorbezogene Größen UD' und UQ' in kartesischer Darstellung umgewandelt werden. Dann wird in einer Steuerdaten-Ermittlungseinrichtung 5 ein Steuerdatensatz SD aus einer Steuerdatentabelle auslesen, der UD' und UQ' zugeordnet ist. Eine Steuereinrichtung 6 in Form einer Dreiphasen-IGBT-Halbbrückenvorrichtung steuert dann die Bestromung S_U, S_V und S_W der drei Phasen der Synchronmaschine 50 gemäß dem Steuerdatensatz SD (= SD_U, SD_V, SD_W).

Die Transformationen der statorbezogenen Größen in rotorbezogene Größen und umgekehrt sind rechenintensiv und verursachen einen hohen Implementierungsaufwand. Zum Regeln der Synchronmaschine au[ Grundlage der zurückgeführten Phasenströme gemäß Fig. 3 müssen außerdem drei Phasenstromsensoren 71, 72, 73 bereitgestellt werden.

Die Offenlegungsschrift DE 10 2011 118 480 A1 beschreibt ein System zum Betreiben einer elektrischen Drehfeldmaschine. Dabei werden einem Bestimmungsmittel bzw. einer Transformationseinrichtung ein Drehmomentsollwert und ein Drehzahlistwert zugeführt. Mittels eines in dem Bestimmungsmittel hinterlegten Kennfeldes wird aus dem zugeführten Drehmomentsollwert und dem Drehzahlistwert ein Wertepaar bestimmt, das aus einem Spannungsbetrag und einem Winkelwert besteht. Das Dokument DE 10 2008 042 931 A1 beschreibt ein Verfahren zur Regelung einer Synchronmaschine. Dabei werden ein Soll-Drehmoment und eine Soll-Drehzahl einem Sollwertgeber beziehungsweise einer Transformationseinrichtung zugeführt. Unter Verwendung eines Kennfeldes werden aus dem Soll-Drehmoment und der Soll-Drehzahl Soll-Stromwerte ermittelt. Die Offenlegungsschrift WO 2014/198444 A2 betrifft ein Verfahren zum Betreiben eines elektronisch kommutierten Stellmotors.

### Offenbarung der Erfindung

Die Aufgabe der vorliegenden Erfindung besteht daher in der Bereitstellung eines Verfahrens und einer Vorrichtung zum Steuern bzw. Regeln einer permanent erregten Synchronmaschine mit reduziertem Implementierungsaufwand.

Die Erfindung wird durch die Merkmale der unabhängigen Ansprüche definiert.

Allen erfindungsgemäßen Ausführungsformen liegt die überraschende Erkenntnis des Erfinders zugrunde, dass eine permanent erregte

Synchronmaschine im Vergleich zur konventionellen Steuerung/Regelung mit vektorbasierten und insbesondere auch rotorbezogenen Größen (also auf Grundlage von Größen in kartesischer Darstellung bzw. d/q-Darstellung) deutlich aufwandsärmer gesteuert/geregelt werden kann, wenn die Steuerung/Regelung auf Grundlage von Größen in Polarkoordinatendarstellung erfolgt.

Ein Polarkoordinatenwert ordnet jedem Punkt in einer Ebene als Radialkomponente, auch Betragskomponente oder Radialkoordinate bezeichnet, einen Abstand dieses Punktes zu einem fest vorgegebenen Punkt, insbesondere dem Nullpunkt, und als Winkelkomponente bzw. Winkelkoordinate einen Winkel zu einer festen Richtung, insbesondere der horizontalen Richtung bzw. 0°-Richtung, zu. Eine mathematische Darstellung eines Polarkoordinatenwertes U mit einer Radialkoordinate U bzw. |U| und einer Winkelkomponente Phi lautet: U= U•e^{jPhi} = |U|•e^{jPhi}. Im Rahmen der Schilderung der vorliegenden Erfindung wird hingegen bevorzugt die Schreibweise {U, Phi} für einen Polarkoordinatenwert mit der Radialkoordinate U und der Winkelkoordinate Phi verwendet.

Im Folgenden soll die Erfindung anhand der Zeichnung näher erläutert werden. Dazu zeigen
- Figur 1: eine Vorrichtung zum Steuern einer permanent erregten Synchronmaschine,
- Figur 2: einen Regler zum Regeln einer permanent erregten Synchronmaschine und
- Figur 3: eine Regleranordnung aus dem Stand der Technik.

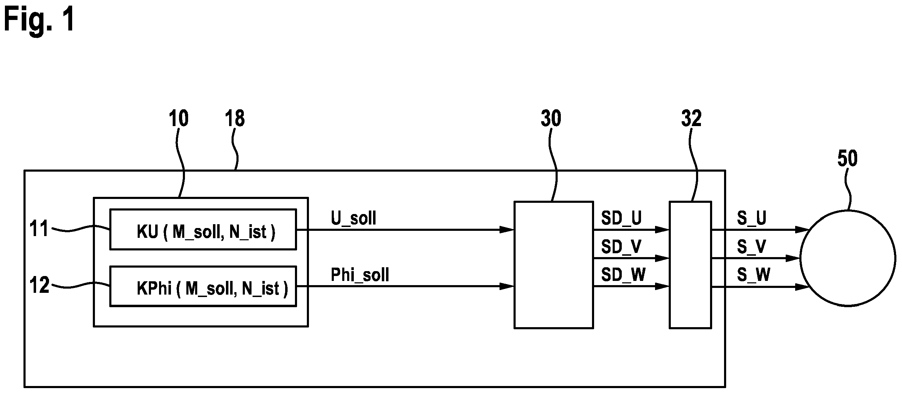

Fig. 1 veranschaulicht eine Vorrichtung 18 zum Steuern einer permanent erregten Synchronmaschine 50. Die Steuerungsvorrichtung umfasst eine Transformationseinrichtung 10, eine Steuerdaten-Ermittlungseinrichtung 30 und eine Steuereinrichtung 32. Die Transformationseinrichtung 10 ist ausgebildet zum Transformieren eines von einem Controller empfangenen Sollmomentwertes M_soll, das von Synchronmaschine erzeugt werden soll, und eines erfassten Läuferdrehzahlwertes N_ist, der die aktuelle Läuferdrehzahl der Synchronmaschine angibt und durch einen Drehzahlsensor erfasst worden ist, in einen Soll-Polarkoordinatenwert {U_soll, Phi_soll} mit dem Betrag, insbesondere einer Spannung, U_soll (Radialkoordinatenwert) und dem Winkel, insbesondere einer Spannung, Phi_soll (Winkelkoordinatenwert) auf Grundlage einer vorgegebenen Transformationszuordnung.

Diese vorgegebene Transformationszuordnung ist insbesondere durch ein erstes Kennfeld KU, das in einer ersten Einrichtung 11 abgespeichert ist, und durch ein zweites Kennfeld KPhi, das in einer zweiten Einrichtung 12 abgespeichert ist, gebildet. Durch Adressierung des ersten Kennfeldes KU mit dem empfangenen Sollmomentwert M_soll und dem Läuferdrehzahlwert N_ist wird die Radialkomponente U_soll der Soll-Polarkoordinate (Radialkoordinatenwert) ermittelt bzw. aus dem Kennfeld KU ausgelesen. Ähnlich wird durch Adressierung des zweiten Kennfeldes KPhi mit dem empfangenen Sollmomentwert M_soll und dem Läuferdrehzahlwert N_ist die Winkelkomponente Phi_soll der Soll-Polarkoordinate (Winkelkoordinatenwert) ermittelt bzw. aus dem Kennfeld KPhi ausgelesen. Die Kennfelder KU und KPhi speichern also eine Zuordnung eines Wertepaares von M_soll und N_ist zu einem Polarkoordinatenwert mit einer Radialkomponte U_soll und einer Winkelkomponente Phi_soll.

Der durch die (M_soll, N_ist)-Adressierung der Kennfelder KU und KPhi ermittelte Soll-Polarkoordinatenwert {U_soll, Phi_soll} wird in der Steuerungsvorrichtung 18 an die Steuerdaten-Ermittlungseinrichtung 30 eingegeben, um aus einer in dieser gespeicherten, vorgegebenen Steuerdatentabelle einen dem eingegebenen Polarkoordinatenwert {U_soll, Phi_soll} zugeordneten Steuerdatensatz SD zu ermitteln. Der ermittelte Steuerdatensatz SD enthält durch den Polarkoordinatenwert {U_soll, Phi_soll} festgelegte Daten bezüglich der Bestromung der Synchronmaschine und wird von der Steuerdaten-Ermittlungseinrichtung 30 an die Steuereinrichtung 32 übertragen. Die Steuereinrichtung 32 ist beispielhaft als Dreiphasen-IGBT-Halbbrückenvorrichtung ausgebildet und steuert die Bestromung der Synchronmaschine 50, beispielsweise durch Ein- und Ausschalten der an die Synchronmaschine gespeisten Ströme der Phasen U, V und W, auf Grundlage des von der Steuerdaten-Ermittlungseinrichtung 30 übertragenen Steuerdatensatzes SD (in Fig. 1 durch SD_U, SD_V und SD_W veranschaulicht).

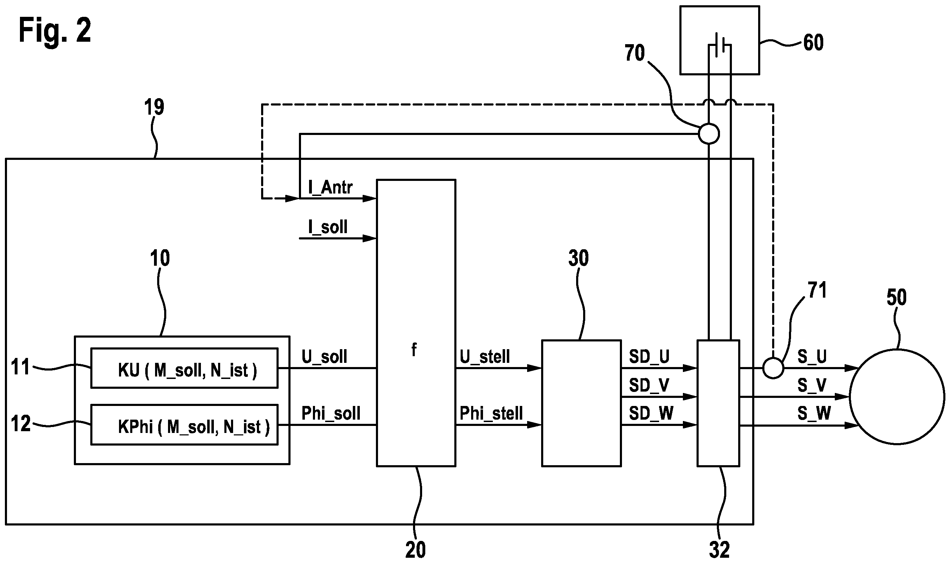

In Fig. 2 ist ein Regler zum Regeln einer permanent erregten Synchronmaschine beispielhaft veranschaulicht, der eine funktionale Erweiterung der in Fig. 1 gezeigten Vorrichtung 18 darstellt, so dass identische Komponenten mit denselben Bezugszeichen in Fig. 1 und Fig. 2 versehen sind. Mit Verweis auf Fig. 2 umfasst ein Regler 19 eine Transformationseinrichtung 10, eine Steuerdaten-Ermittlungseinrichtung 30 und eine Steuereinrichtung 32, die im Rahmen der Erläuterung von Fig. 1 bereits ausführlich dargestellt worden sind, so dass hier auf eine Erläuterung verzichtet wird.

Ferner umfasst der Regler 19 eine Regelungseinrichtung 20 zum Anwenden eines vorgegebenen Regelalgorithmus f zur Bestimmung einer Stellgröße in Form eines Polarkoordinatenwertes {U_stell, Phi_stell} auf Grundlage der von der Transformationseinrichtung 10 in Form des Polarkoordinatenwertes {U_soll, Phi_soll} bereitgestellten bzw. ermittelten Sollgröße bzw. Führungsgröße. Die Regelungseinrichtung 20 verwendet ferner einen an diese eingegebenen Sollstromwert l_soll als Sollgröße bzw. Führungsgröße bei der Anwendung des Regelalgorithmus f.

Zur Realisierung der Regelung, also der Veränderung einer Stellgröße durch Anwendung eines Regelalgorithmus auf Grundlage einer Sollgröße bzw. Führungsgröße und einer zurückgeführten Regelgröße, verwendet die Regelungseinrichtung 20 bzw. der Regelalgorithmus f einen erfassten Antriebsstromwert l_Antr der Synchronmaschine 50 als zurückgeführte Regelgröße. Der Regelalgorithmus f und der darin berücksichtigte Antriebsstromwert l_Antr ermöglichen eine Regelung der permanent erregten Synchronmaschine mit guter Dynamik.

Der erfasste Antriebsstromwert l_Antr ist der Wert eines Stromes, der von einer Batterie 60 zum elektrischen Antreiben der Synchronmaschine 50 bereitgestellt wird, und kann durch einen Batteriestromsensor 70 erfasst werden, mit dem der Regler 19 versehen oder gekoppelt ist. Die in Fig. 2 veranschaulichte Batterie 60 kann eine, insbesondere wiederaufladbare, Batterie eines Elektrofahrzeugs oder Hybridfahrzeugs sein, die eine permanent erregte Synchronmaschine unter Regelung durch den vorteilhaften Regler mit elektrischer Energie versorgt, um eine Fortbewegung, insbesondere ein Beschleunigen und/oder Abbremsen, des Fahrzeugs zu ermöglichen bzw. zu bewirken. Der Begriff Batterie umfasst beliebige Speicher elektrischer Energie.

Gemäß einer anderen erfindungsgemäßen Ausführungsform wird der Antriebsstromwert l_Antr aus einem beliebigen Phasenstrom der drei Phasenströme der Synchronmaschine durch einen einzigen Phasenstromsensor 71 ermittelt, mit dem der Regler 19 versehen oder gekoppelt ist.

Im Gegensatz zur der in Fig. 3 gezeigten Regelung mit Verwendung von Größen in kartesischer Koordinatendarstellung nach dem Stand der Technik erfordert die polarkoordinatenbasierte Regelung folglich nicht Stromwerte von drei Phasenstromsensoren sondern nur entweder einen Stromwert eines Batteriestromsensors 70 oder einen Stromwert eines einzigen Phasenstromsensors 71, ohne Beschränkung auf eine spezifische Phase U, V oder W. Die Verwendung nur eines einzigen Stromssensors ermöglicht eine Reduzierung des Hardware-Aufwandes.

Anders als bei der in Fig. 1 veranschaulichten Vorrichtung 18 sind bei dem Regler 19, der in Fig. 2 veranschaulicht ist, die Transformationseinrichtung 10, die Regelungseinrichtung 20, die Steuerdaten-Ermittlungseinrichtung 30 und die Steuereinrichtung 32 so aufeinander folgend gekoppelt, dass die Transformationseinrichtung 10 den Soll-Polarkoordinatenwert {U_soll, Phi_soll} insbesondere als Führungsgröße an die Regelungseinrichtung 20 eingibt, die Regelungseinrichtung 20 den Stell-Polarkoordinatenwert {U_stell, Phi_stell} als Stellgröße an die Steuerdaten-Ermittlungseinrichtung 30 eingibt, die Steuerdaten-Ermittlungseinrichtung 30 den ermittelten Steuerdatensatz SD an die Steuereinrichtung 32 eingibt, und die Steuereinrichtung 32 die Bestromung der Synchronmaschine 50 auf Grundlage des Steuerdatensatz SD steuert.

Die polarkoordinatenbasierte Regelung einer permanent erregten Synchronmaschine erfordert im Vergleich zur konventionellen Vektorregelung mit orthogonalen Größen keine aufwändigen Clarke- und Park-Transformationen, die konventionell zur Umrechnung zwischen rotor- und statorbezogenen Größen benötigt werden. Somit kann die polarkoordinatenbasierte Regelung für eine permanent erregte Synchronmaschine mit reduziertem Hardware- und Software-Aufwand realisiert werden.

Besonders vorteilhaft können das beschriebene Verfahren und die beschriebene Vorrichtung zum Steuern bzw. Regeln einer durch eine Batterie zur Fortbewegung, insbesondere zum Beschleunigen und/oder Abbremsen, eines Elektrofahrzeugs oder Hybridfahrzeugs angetriebenen permanent erregten Synchronmaschine verwendet werden.

## Patentansprüche

1. Verfahren zum Regeln einer permanent erregten Synchronmaschine (50) mit den einem wiederholt ausgeführten Regelungszyklus zugehörigen Schritten:
Empfangen eines Sollmomentwertes (M_soll), und Erfassen eines Läuferdrehzahlwertes (N_ist) der Synchronmaschine;
Erfassen eines Antriebsstromwertes (I_Antr) der Synchronmaschine;
Transformieren des empfangenen Sollmomentwertes (M_soll) und des erfassten Läuferdrehzahlwertes (N_ist) in einen Soll-Polarkoordinatenwert (U_soll, Phi_soll) auf Grundlage einer vorgegebenen Transformationszuordnung (10, 11, 12);
Anwenden eines vorgegebenen Regelalgorithmus (20, f) zur Bestimmung eines Stellgröße-Polarkoordinatenwertes (U_stell, Phi_Stell) auf Grundlage des Soll-Polarkoordinatenwertes (U_soll, Phi_soll), sowie des Sollstromwertes (I_soll), und des erfassten Antriebsstromwertes (I_Antr);
Ermitteln eines Steuerdatensatzes (SD_U, SD_V, SD_W) aus einer vorgegebenen Steuerdatentabelle (30) auf Grundlage des Stellgröße-Polarkoordinatenwertes (U_stell, Phi_Stell); und
Steuern einer Bestromung (S_U, S_V, S_W) der Synchronmaschine auf Grundlage des ermittelten Steuerdatensatzes (SD_U, SD_V, SD_W), **dadurch gekennzeichnet, dass** zusätzlich ein Sollstromwert (I_soll) empfangen wird, und dass als der Antriebsstromwert (I_Antr) ein Wert eines Batteriestroms von einer die Synchronmaschine elektrisch antreibenden Batterie (60) erfasst wird, und wobei der Regelalgorithmus (20, f) mit dem Soll-Polarkoordinatenwert (U_soll, Phi_soll) und dem Sollstromwert (I_soll) als eine Führungsgröße und dem erfassten Antriebsstromwert (I_Antr) als eine zurückgeführte Regelgröße angewendet wird..

2. Verfahren nach Anspruch 1, **dadurch gekennzeichnet, dass** ein einziger Antriebsstromwertes (I_Antr) der Synchronmaschine erfasst wird.

3. Verfahren nach einem der vorherigen Ansprüche, **dadurch gekennzeichnet, dass** die vorgegebene Transformationszuordnung (10, 11, 12) gebildet ist durch ein erstes Kennfeld (11, KU) zur Transformation des Sollmomentwertes (M_soll) und des Läuferdrehzahlwertes (N_ist) in einen Radialkoordinatenwert (U_soll) des Soll-Polarkoordinatenwertes, insbesondere in einen Spannungsbetragswert, und/oder durch ein zweites Kennfeld (12, KPhi) zur Transformation des Sollmomentwertes (M_soll) und des Läuferdrehzahlwertes (N_ist) in einen Winkelkoordinatenwert (Phi_soll) des Soll-Polarkoordinatenwertes, insbesondere in einen Spannungswinkelwert.

4. Verfahren nach einem der vorherigen Ansprüche, **dadurch gekennzeichnet, dass** die Steuerdatentabelle (30) eine Vielzahl von Steuerdatensätzen (SD_U, SD_V, SD_W) mit jeweiligen Schaltzeiten für die Bestromung der die Synchronmaschine steuernde Brückenvorrichtungen (32), die insbesondere zusammen als eine Dreiphasen-IGBT-Halbbrückenvorrichtung ausgebildet sind, umfasst, und dass in der Steuerdatentabelle (30) eine Zuordnung zwischen einer Vielzahl von Polarkoordinatenwerten und der Vielzahl von Steuerdatensätzen festlegt ist, wobei insbesondere jedem der Steuerdatensätze ein jeweiliger Polarkoordinatenwert zugeordnet ist.

5. Verfahren nach einem der Ansprüche 2 bis 4, **dadurch gekennzeichnet, dass** als der Antriebsstromwert (I_Antr) ein Wert eines einzigen Phasenstroms der der Synchronmaschine zugeführten Phasenströme erfasst wird.

6. Regler (19) zum Regeln einer permanent erregten Synchronmaschine, wobei der Regler Einrichtungen (10, 11, 12, 30, 32) einer Vorrichtung umfasst, wobei die Vorrichtung
eine Transformationseinrichtung (10, 11, 12) zum Transformieren eines von einem Controller empfangenen Sollmomentwertes (M_soll) und eines von einem Drehzahlsensor erfassten Läuferdrehzahlwertes (N_ist) der Synchronmaschine (50) in einen Soll-Polarkoordinatenwert (U_soll, Phi_soll) auf Grundlage einer vorgegebenen Transformationszuordnung (10, 11, 12);
eine Steuerdaten-Ermittlungseinrichtung (30) zum Ermitteln eines Steuerdatensatzes (SD_U, SD_V, SD_W) aus einer vorgegebenen Steuerdatentabelle (30) auf Grundlage des Soll-Polarkoordinatenwertes (U_soll. Phi_soll);
und
eine Steuereinrichtung (32) zum Steuern einer Bestromung (S_U, S_V, S_W) der Synchronmaschine auf Grundlage des ermittelten Steuerdatensatzes (SD_U, SD_V, SD_W), damit die Synchronmaschine in ihrem stationären Zustand ein dem Sollmomentwert (M_soll) entsprechendes Sollmoment erzeugt,
umfasst
und der Regler (19)
eine Regelungseinrichtung (20) zum Anwenden eines vorgegebenen Regelalgorithmus (20, f) zur Bestimmung eines Stellgröße-Polarkoordinatenwertes (U_stell, Phi_stell) auf Grundlage des Soll-Polarkoordinatenwertes (U_soll, Phi_stell), sowie eines empfangenen Sollstromwertes (I_soll), und eines erfassten Antriebsstromwertes (I_Antr) der Synchronmaschine umfasst,
wobei die Regelungseinrichtung (20), die Steuerdaten-Ermittlungseinrichtung (30) und die Steuereinrichtung (32) gekoppelt sind zum Ermitteln eines Steuerdatensatzes (SD_U, SD_V, SD_W) durch die Steuerdaten-Ermittlungseinrichtung (30) auf Grundlage des von der Regelungseinrichtung (20) ausgegebenen Stellgröße-Polarkoordinatenwertes (U_stell, Phi_stell) und zum Steuern der Bestromung der Synchronmaschine durch die Steuereinrichtung (32) auf Grundlage des ermittelten Steuerdatensatzes (SD_U, SD_V, SD_W),
**dadurch gekennzeichnet, dass**
der Regler mit einem Batteriestromsensor (70) zum Erfassen eines Stroms einer die Synchronmaschine elektrisch antreibenden Batterie (60) als den Antriebsstromwert (I_Antr) gekoppelt oder versehen ist
und wobei der Regelalgorithmus (20, f) mit dem Soll-Polarkoordinatenwert (U_soll, Phi_soll) und dem Sollstromwert (I_soll) als eine Führungsgröße und dem erfassten Antriebsstromwert (I_Antr) als eine zurückgeführte Regelgröße angewendet wird.

7. Regler gemäß Anspruch 6, **dadurch gekennzeichnet, dass** der Regler mit einem einzigen Phasenstromsensor (71) zum Erfassen eines einzelnen der der Synchronmaschine zugeführten Phasenströme als den Antriebsstromwert (I_Antr) gekoppelt oder versehen ist.

8. Verwendung eines Reglers gemäß Anspruch 6 oder 7 zum Regeln einer durch eine Batterie zur Fortbewegung eines Elektrofahrzeugs oder Hybridfahrzeugs angetriebenen permanent erregten Synchronmaschine.

## Claims

1. Method for regulating a permanently excited synchronous machine (50), having the steps associated with a repeatedly executed regulating cycle:
receiving a setpoint torque value (M_soll) and capturing a rotor speed value (N_ist) of the synchronous machine;
capturing a drive current value (I_Antr) of the synchronous machine;
transforming the received setpoint torque value (M_soll) and the captured rotor speed value (N_ist) into a setpoint polar coordinate value (U_soll, Phi_soll) on the basis of a predefined transformation assignment (10, 11, 12) ;
applying a predefined regulating algorithm (20, f) to determine a manipulated variable polar coordinate value (U_stell, Phi_Stell) on the basis of the setpoint polar coordinate value (U_soll, Phi_soll), as well as the setpoint current value (I_soll) and the captured drive current value (I_Antr);
ascertaining a control data record (SD_U, SD_V, SD_W) from a predefined control data table (30) on the basis of the manipulated variable polar coordinate value (U_stell, Phi_Stell); and
controlling an energization (S_U, S_V, S_W) of the synchronous machine on the basis of the ascertained control data record (SD_U, SD_V, SD_W), **characterized in that** a setpoint current value (I_soll) is additionally received, and **in that** a value of a battery current from a battery (60) electrically driving the synchronous machine is captured as the drive current value (I_Antr), and wherein the regulating algorithm (20, f) is applied with the setpoint polar coordinate value (U_soll, Phi_soll) and the setpoint current value (I_soll) as a reference variable and with the captured drive current value (I_Antr) as a fed-back regulating variable.

2. Method according to Claim 1, **characterized in that** a single drive current value (I_Antr) of the synchronous machine is captured.

3. Method according to either of the preceding claims, **characterized in that** the predefined transformation assignment (10, 11, 12) is formed by a first characteristic diagram (11, KU) to transform the setpoint torque value (M_soll) and the rotor speed value (N_ist) into a radial coordinate value (U_soll) of the setpoint polar coordinate value, in particular into a voltage absolute value, and/or by a second characteristic diagram (12, KPhi) to transform the setpoint torque value (M_soll) and the rotor speed value (N_ist) into an angle coordinate value (Phi_soll) of the setpoint polar coordinate value, in particular into a voltage angle value.

4. Method according to one of the preceding claims, **characterized in that** the control data table (30) comprises a multiplicity of control data records (SD_U, SD_V, SD_W) having respective switching times for the energization of the bridge apparatuses (32) that control the synchronous machine and in particular together are in the form of a three-phase IGBT half-bridge apparatus, and **in that** an assignment between a multiplicity of polar coordinate values and the multiplicity of control data records is established in the control data table (30), wherein in particular a respective polar coordinate value is assigned to each of the control data records.

5. Method according to one of Claims 2 to 4, **characterized in that** a value of a single phase current of the phase currents supplied to the synchronous machine is captured as the drive current value (I_Antr).

6. Regulator (19) for regulating a permanently excited synchronous machine, wherein the regulator comprises devices (10, 11, 12, 30, 32) of an apparatus, wherein the apparatus
comprises
a transformation device (10, 11, 12) for transforming a setpoint torque value (M_soll) received from a controller and a rotor speed value (N_ist) of the synchronous machine (50) captured by a speed sensor into a setpoint polar coordinate value (U_soll, Phi_soll) on the basis of a predefined transformation assignment (10, 11, 12);
a control data ascertainment device (30) for ascertaining a control data record (SD_U, SD_V, SD_W) from a predefined control data table (30) on the basis of the setpoint polar coordinate value (U_soll, Phi_soll);
and
a control device (32) for controlling an energization (S_U, S_V, S_W) of the synchronous machine on the basis of the ascertained control data record (SD_U, SD_V, SD_W) so that the synchronous machine produces a setpoint torque corresponding to the setpoint torque value (M_soll) in its steady state,
and the regulator (19)
comprises a regulating device (20) for applying a predefined regulating algorithm (20, f) to determine a manipulated variable polar coordinate value (U_stell, Phi_stell) on the basis of the setpoint polar coordinate value (U_soll, Phi_stell), as well as a received setpoint current value (I_soll) and a captured drive current value (I_Antr) of the synchronous machine,
wherein the regulating device (20), the control data ascertainment device (30) and the control device (32) are coupled to ascertain a control data record (SD_U, SD_V, SD_W) by way of the control data ascertainment device (30) on the basis of the manipulated variable polar coordinate value (U_stell, Phi_stell) output by the regulating device (20) and to control the energization of the synchronous machine by way of the control device (32) on the basis of the ascertained control data record (SD_U, SD_V, SD_W),
**characterized in that**
the regulator is coupled to or provided with a battery current sensor (70) for capturing a current of a battery (60) electrically driving the synchronous machine as the drive current value (I_Antr),
and wherein the regulating algorithm (20, f) is applied with the setpoint polar coordinate value (U_soll, Phi_soll) and the setpoint current value (I_soll) as a reference variable and with the captured drive current value (I_Antr) as a fed-back regulating variable.

7. Regulator according to Claim 6, **characterized in that** the regulator is coupled to or provided with a single phase current sensor (71) to capture a single one of the phase currents supplied to the synchronous machine as the drive current value (I_Antr).

8. Use of a regulator according to Claim 6 or 7 for regulating a permanently excited synchronous machine driven by a battery for propelling an electric vehicle or hybrid vehicle.

## Revendications

1. Procédé de régulation d'une machine synchrone (50) excitée en permanence, comprenant les étapes associées à un cycle de régulation exécuté de manière répétée :
recevoir une valeur de couple théorique (M_soll), et détecter une valeur de vitesse de rotation de rotor (N_ist) de la machine synchrone ;
détecter une valeur de courant d'entraînement (I_Antr) de la machine synchrone ;
transformer la valeur de couple théorique (M_soll) reçue et la valeur de vitesse de rotation de rotor (N_ist) détectée en une valeur de coordonnées polaires théorique (U_soll, Phi_soll) sur la base d'une association de transformation prédéfinie (10, 11, 12) ;
appliquer un algorithme de régulation prédéfini (20, f) pour déterminer une valeur de coordonnées polaires de grandeur de réglage (U_stell, Phi_Stell) sur la base de la valeur de coordonnées polaires théorique (U_soll, Phi_soll) ainsi que de la valeur de courant théorique (I_soll), et de la valeur de courant d'entraînement (I_Antr) détectée ;
établir un jeu de données de commande (SD_U, SD_V, SD_W) à partir d'un tableau de données de commande prédéfini (30) sur la base de la valeur de coordonnées polaires de grandeur de réglage (U_stell, Phi_Stell) ; et
commander une alimentation électrique (S_U, S_V, S_W) de la machine synchrone sur la base du jeu de données de commande (SD_U, SD_V, SD_W) établi,
**caractérisé en ce qu'**en plus, une valeur de courant théorique (I_soll) est reçue, et **en ce qu'**une valeur d'un courant de batterie d'une batterie (60) entraînant électriquement la machine synchrone est détectée en tant que valeur de courant d'entraînement (I_Antr), et l'algorithme de régulation (20, f) étant appliqué avec la valeur de coordonnées polaires théorique (U_soll, Phi_soll) et la valeur de courant théorique (I_soll) comme une grandeur de référence et avec la valeur de courant d'entraînement (I_Antr) détectée comme une grandeur de régulation de rétroaction.

2. Procédé selon la revendication 1, **caractérisé en ce qu'**une seule valeur de courant d'entraînement (I_Antr) de la machine synchrone est détectée.

3. Procédé selon l'une quelconque des revendications précédentes, **caractérisé en ce que** l'association de transformation (10, 11, 12) prédéfinie est formée par un premier diagramme caractéristique (11, KU) destiné à la transformation de la valeur de couple théorique (M_soll) et de la valeur de vitesse de rotation de rotor (N_ist) en une valeur de coordonnées radiales (U_soll) de la valeur de coordonnées polaires théorique, en particulier en une valeur de quantité de tension, et/ou par un deuxième diagramme caractéristique (12, KPhi) destiné à la transformation de la valeur de couple théorique (M_soll) et de la valeur de vitesse de rotation de rotor (N_ist) en une valeur de coordonnées angulaires (Phi_soll) de la valeur de coordonnées polaires théorique, en particulier en une valeur d'angle de tension.

4. Procédé selon l'une quelconque des revendications précédentes, **caractérisé en ce que** le tableau de données de commande (30) comprend une pluralité de jeux de données de commande (SD_U, SD_V, SD_W) avec des temps de commutation respectifs pour l'alimentation électrique des dispositifs en pont (32) commandant la machine synchrone, qui sont en particulier réalisés ensemble sous forme de dispositif en demi-pont IGBT triphasé, et **en ce que** dans le tableau de données de commande (30), une association entre une pluralité de valeurs de coordonnées polaires et la pluralité de jeux de données de commande est spécifiée, une valeur de coordonnées polaires respective étant en particulier associée à chacun des jeux de données de commande.

5. Procédé selon l'une quelconque des revendications 2 à 4, **caractérisé en ce que** comme valeur de courant d'entraînement (I_Antr), une valeur d'un seul courant de phase des courants de phase amenés à la machine synchrone est détectée.

6. Régulateur (19) permettant de réguler une machine synchrone excitée en permanence, le régulateur comprenant des équipements (10, 11, 12, 30, 32) d'un dispositif,
le dispositif comprenant
un équipement de transformation (10, 11, 12) permettant de transformer une valeur de couple théorique (M_soll) reçue d'un contrôleur et une valeur de vitesse de rotation de rotor (N_ist) de la machine synchrone (50), détectée par un capteur de vitesse de rotation, en une valeur de coordonnées polaires théorique (U_soll, Phi_soll) sur la base d'une association de transformation prédéfinie (10, 11, 12) ;
un équipement d'établissement de données de commande (30) permettant d'établir un jeu de données de commande (SD_U, SD_V, SD_W) à partir d'un tableau de données de commande prédéfini (30) sur la base de la valeur de coordonnées polaires théorique (U_soll, Phi_soll) ; et
un équipement de commande (32) permettant de commander une alimentation électrique (S_U, S_V, S_W) de la machine synchrone sur la base du jeu de données de commande (SD_U, SD_V, SD_W) établi pour que la machine synchrone génère dans son état stationnaire un couple théorique correspondant à la valeur de couple théorique (M_soll),
et le régulateur (19) comprenant un équipement de régulation (20) pour appliquer un algorithme de régulation prédéfini (20, f) afin de déterminer une valeur de coordonnées polaires de grandeur de réglage (U_stell, Phi_stell) sur la base de la valeur de coordonnées polaires théorique (U_soll, Phi_stell) ainsi que d'une valeur de courant théorique (I_soll) reçue et d'une valeur de courant d'entraînement (I_Antr) détectée de la machine synchrone,
l'équipement de régulation (20), l'équipement d'établissement de données de commande (30) et l'équipement de commande (32) étant couplés pour établir un jeu de données de commande (SD_U, SD_V, SD_W) par l'équipement d'établissement de données de commande (30) sur la base de la valeur de coordonnées polaires de grandeur de réglage (U_stell, Phi_stell) sortie par l'équipement de régulation (20) et pour commander l'alimentation électrique de la machine synchrone par l'équipement de commande (32) sur la base du jeu de données de commande (SD_U, SD_V, SD_W) établi,
**caractérisé en ce que** le régulateur est couplé avec ou muni d'un capteur de courant de batterie (70) permettant de détecter un courant d'une batterie (60) entraînant électriquement la machine synchrone en tant que valeur de courant d'entraînement (I_Antr),
et l'algorithme de régulation (20, f) étant appliqué avec la valeur de coordonnées polaires théorique (U_soll, Phi_soll) et la valeur de courant théorique (I_soll) comme une grandeur de référence et avec la valeur de courant d'entraînement (I_Antr) détectée comme une valeur de régulation de rétroaction.

7. Régulateur selon la revendication 6, **caractérisé en ce que** le régulateur est couplé avec ou muni d'un seul capteur de courant de phase (71) permettant de détecter un seul des courants de phase amenés à la machine synchrone en tant que valeur de courant d'entraînement (I_Antr).

8. Utilisation d'un régulateur selon la revendication 6 ou 7, permettant de réguler une machine synchrone excitée en permanence, entraînée par une batterie pour la propulsion d'un véhicule électrique ou d'un véhicule hybride.
